# EUROPEAN PATENT APPLICATION

(11) **EP 4 445 981 A1**
(43) Date of publication of application: **16.10.2024**
(21) Application number: 24166743.5
(22) Date of filing: 27.03.2024
(51) Int. Cl.: B01D 15/22, G01N 30/30, G01N 30/60

(54) **LIQUID CHROMATOGRAPHY REACTOR**

(30) Priority: 28.03.2023 GB 202304545
(71) Applicant: Thermo Fisher Scientific (Bremen) GmbH, 28199 Bremen (DE)
(72) Inventor: Gruessing, Hauke, 27777 Ganderkesee (DE); Stoebener, Nils, 28865 Lilienthal (DE); Felsmann, Daniel, 28844 Weyhe (DE)

(57) **Abstract**

A reactor (1) for a liquid chromatography system comprises a first capillary cartridge, a second capillary cartridge, a first housing (11) for accommodating the first capillary cartridge, and a second housing (12) for accommodating the second capillary cartridge. The first housing (11) comprises a heating element for heating the first capillary cartridge. The second housing (12) can comprise a cooling element for cooling the second capillary cartridge.

## Description

### Field of the invention

The invention relates to a liquid chromatography reactor. More in particular, the invention relates to a liquid chromatography reactor assembly, to a liquid chromatography isotope ratio mass spectrometry system comprising such a reactor assembly, and to the use of such a reactor.

### Background of the invention

The field of liquid chromatography (LC) is well known. It is also well known to combine liquid chromatography with isotope ratio mass spectrometry (IRMS). The LC IsoLink^{™} IRMS System sold by Thermo Fisher Scientific couples high performance liquid chromatography (HPLC) with isotope ratio mass spectrometry (IRMS). In such a system, separated organic species can be oxidized to CO₂ and the resulting CO₂ is provided to the IRMS system. Such a process is disclosed in US 7 213 443 B2, where gas is generated from an eluate of a liquid chromatograph (LC). Subsequently, the gas is separated from the eluate. Finally, the gas is fed to an instrument, an isotope ratio mass spectrometer (IRMS), for isotopic ratio analysis. Another example of an LC-IRMS method is disclosed in DE 10 2004 010 969 B4.

Such methods typically require an LC reactor which includes a heated capillary having a length of several meters. A typical reactor used for this purpose has a cylindrical heater, around which the capillary is wound in a meandering pattern. Downstream of the reactor the capillary is arranged, again in a meandering pattern, near a heat sink to reduce the temperature of the fluid flowing through the capillary.

To provide a sufficiently long residence time of the LC eluate in the capillary, the capillary should be long, for example 3 to 5 m. To avoid diffusion and peak broadening, the capillary should have a narrow inner diameter, for example less than 0.5 mm or even less than 0.25 mm. However, a long and narrow capillary is prone to clogging with particulate matter. A clogged-up capillary needs to be replaced, which typically requires the whole reactor to be replaced. It will be clear that this is not efficient.

It is known per se to accommodate a capillary in a cartridge. For example, US 8 641 882 B2 discloses a capillary column cartridge for a separation system. The path of the fused silica capillary through the cartridge body had a coil shape or another non-planar path configuration. The body is configured to be engaged to a separation system module.

The capillary cartridge of US 8 641 882 B2 allows a capillary in a separation system to be exchanged in case it is clogged or otherwise no longer suitable for use. However, this known capillary cartridge can only be used for heating the capillary and fails to replace the part of the capillary arranged in or on a heat sink. In addition, the coil-shaped path of the capillary through the cartridge body of US 8 641 882 B2 may not result in optimal heating, as multiple loops of the capillary are stacked.

### Summary of the invention

Accordingly, the invention provides a reactor for a liquid chromatography system, in particular a liquid chromatography isotope ratio mass spectrometer (LC-IRMS) system, the reactor comprising:
- a first capillary cartridge,
- a second capillary cartridge,
- a first housing for accommodating the first capillary cartridge,
- a second housing for accommodating the second capillary cartridge,

wherein the first housing comprises a heating element for heating the first capillary cartridge and the second housing comprises a cooling element for cooling the second capillary cartridge,
wherein an output orifice of the first capillary cartridge is connected to an input orifice of the second capillary cartridge, and
wherein the first capillary cartridge is substantially planar and comprises a capillary having a substantially planar path.

By providing both a first capillary cartridge and a second capillary cartridge, the advantages of using a capillary cartridge can be extended to the part of the capillary that requires cooling. Thus, also the part of the capillary arranged on the or the at least one cooling element can be easily exchanged and an exchange of the whole cooling element is no longer required.

By connecting an output orifice of the first capillary cartridge to an input orifice of the second capillary cartridge, a set of capillary cartridges is provided which allows both heating and cooling fluid.

By providing a first capillary cartridge which is substantially planar and comprises a capillary having a substantially planar path, the heat transfer between the first capillary cartridge and the first housing comprises a heating element can be optimized. In addition, handling the capillary cartridge, for example when the capillary cartridge is exchanged, is made easier.

Although the invention will be explained with reference to a reactor having a first and a second capillary cartridge, the invention is not limited to reactors having only two capillary cartridges. That is, embodiments can be envisaged in which the reactor is provided with more than two capillary cartridges, for example three, four or five capillary cartridges, of which at least some may be arranged in series. In such embodiments, a first capillary cartridge could be used for heating, a second one for cooling and a third one for heating again.

The or the at least one heating element may comprise a heating foil, such as an electrically powered flatbed heating foil. The heating foil may be arranged on a support plate, the support plate preferably being a metal support plate. The heating foil may be glued on the support plate. Instead of, or in addition to a heating foil, another type of heating element may be used. For example, an electrically heated heating plate, a heating cartridge and/or a source of infrared (IR) radiation.

The cooling element may comprise a fan. Additionally, or alternatively the cooling element may comprise at least one cooling fin and/or at least one Peltier element and/or be liquid-cooled.

The first capillary cartridge may be larger than the second capillary cartridge. If both the first capillary cartridge and the second capillary cartridge are substantially planar, the surface area of the first capillary cartridge may be between two times and twenty times the surface area of the second capillary cartridge, preferably approximately ten times. In some embodiments, the surfaces of the first and second capillaries may be approximately equal.

The first capillary cartridge and the second capillary cartridge may be spaced apart. This can prevent the transfer of heat from the first capillary cartridge to the second capillary cartridge. In such embodiments, the first housing and the second housing can also be spaced apart. Thus, a direct heat transfer between the first housing and the second housing is avoided, as the first housing can be heated while the second housing can be cooled.

The first capillary cartridge may comprise a single capillary having an input orifice and an output orifice, while the second capillary cartridge may also comprise a single capillary having an input orifice and an output orifice. Advantageously, the output orifice of the first capillary cartridge may be connected to the input orifice of the second capillary cartridge by a connecting duct. The connecting duct may itself be a capillary or part of a capillary. That is, a single capillary may extend through both the first capillary cartridge and the second capillary cartridge and may constitute, or be part of, the connecting duct.

Accordingly, the first capillary cartridge, the connecting duct and the second capillary cartridge may be integrally formed. Thus, the two capillary cartridges and the connecting duct may constitute a single element. Further ducts, such as an input duct and an output duct, may also be part of the integral single capillary cartridges element.

The second capillary cartridge may also be substantially planar. In addition, the capillary of the second capillary cartridge may also be arranged in a planar path. Additionally, or alternatively, the capillary of the first capillary cartridge and/or the capillary of the second capillary cartridge may be arranged in a meandering path. That is, the path may be both planar and meandering so as to provide an even heat distribution. In some embodiments, the capillary paths may not be planar. That is, if the body of the first and/or second capillary is substantially cylindrical, the capillary paths may be substantially cylindrical too.

The capillary of the first capillary cartridge may have a length of between 1 and 6 m, preferably between 2 and 5 m, more preferably approximately 4 m. For some applications, such as application in which components flow through the capillary that are easy to oxidize, a shorter capillary length may be preferred, for example approximately 2 m. The capillaries may, for example, be made of steel, such as stainless steel.

The capillary of the first capillary cartridge may have an inner diameter of between 0.1 and 1.0 mm, preferably between 0.1 and 0.5 mm, more preferably between 0.1 and 0.3 mm, for example approximately 0.25 mm or approximately 0.2 mm.

The first capillary cartridge and/or the second capillary cartridge may comprise an epoxy resin, for example a thermally conductive epoxy resin. The capillary cartridges may each consist of an epoxy body and an embedded capillary only. That is, the capillary cartridges can each have a physical capillary embedded in epoxy resin or another suitable material. Each capillary cartridge may have a thickness of between approximately 2 and 5 mm, for example approximately 3 mm.

The invention further provides a liquid chromatography - isotope ratio mass spectrometry (LC-IRMS) system, comprising a reactor as described above.

The invention additionally provides a use of a reactor as described above, in particular in LC or LC-IRMS, or in liquid chromatography flame ionization detection (LC-FID), for example.

The invention still further provides a first cartridge and a second cartridge for use in the reactor as described above. As described above, the first capillary cartridge and/or the second capillary cartridge may comprise a capillary embedded in epoxy. The first capillary cartridge and/or the second capillary cartridge may be available as separate items but can also be available as a single integral item. That is, the invention yet further provides a set of capillary cartridges, comprising a first capillary cartridge and a second capillary cartridge as described above, which may be connected by a connection duct.

### Brief description of the drawings

Fig. 1 schematically shows a top view of an exemplary first embodiment of a set of capillary cartridges according to the invention.
Fig. 2 schematically shows a top view of an exemplary second embodiment of a set of capillary cartridges according to the invention.
Fig. 3 schematically shows a top view of an exemplary embodiment of a reactor according to the invention having a first housing and a second housing.
Fig. 4 schematically shows a top view of an exemplary top part of a first housing of a reactor according to the invention.
Fig. 5 schematically shows a top view of an exemplary bottom part of a first housing of a reactor according to the invention.
Fig. 6 schematically shows a side view of an exemplary top part of a second housing of a reactor according to the invention.
Fig. 7 schematically shows a top view of an exemplary bottom part of a second housing of a reactor according to the invention.

### Detailed description of exemplary embodiments

The invention provides a novel reactor for liquid chromatography, such as liquid chromatography isotope ratio mass spectrometry (LC-IRMS) or liquid chromatography flame ionization detection (LC-FID). The reactor of the invention is modular and facilitates the handling and replacement of capillaries. This is in particular advantageous when exchanging a blocked capillary. The reactor of the invention may provide:
- a mechanical separation of the capillary from the heater used to heat the reactor,
- a mechanical separation of the housing from the capillary,
- a capillary in a form which allows an easy exchange.

The reactor of the invention may be able to meet several requirements:
- a constant reactor temperature (both in time and in space),
- a good mixing of the eluate and the oxidizing solution,
- a long residence time of the LC eluate at a high temperature,
- minimal diffusion and peak broadening.

Embodiments of the reactor of the invention may comprise:
- a first capillary cartridge,
- a second capillary cartridge,
- a first housing for accommodating the first capillary cartridge, and
- a second housing for accommodating the second capillary cartridge.

The first housing comprises a heating element for heating the first capillary cartridge, while the second housing comprises a cooling element for cooling the second capillary cartridge.

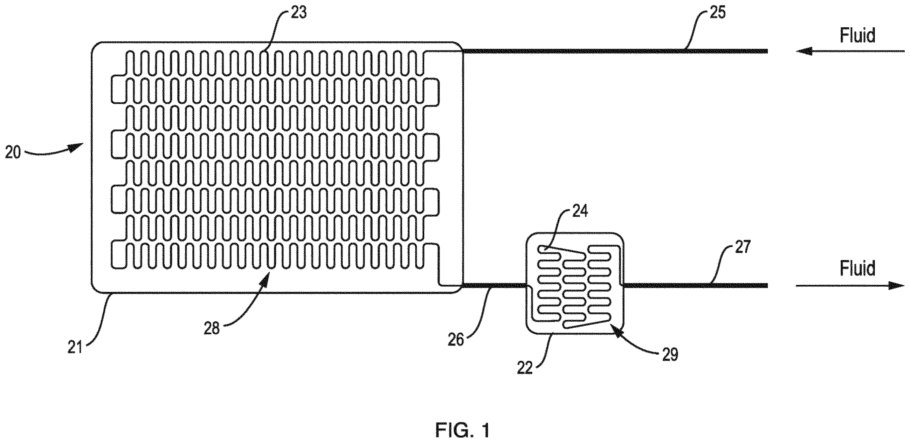

Part of the reactor of the invention is schematically illustrated in Fig. 1, where a set 20 of capillary cartridges is shown to comprise a first capillary cartridge 21 and a second capillary cartridge 22. An input duct 25 is connected to an input orifice of the first capillary cartridge 21, while an output duct 27 is shown to be connected to an output orifice of the second capillary cartridge 22. A connection duct 26 connects an output orifice of the first capillary cartridge 21 and an input orifice of the second capillary cartridge 22. The first capillary cartridge 21 and the second capillary cartridge 22 are therefore fluidly connected and are arranged in series.

The first capillary cartridge 21 is shown to comprise a first internal capillary 23, while the second capillary cartridge 22 is shown to comprise a second internal capillary 24. Both internal capillaries are shown to have a meandering path.

In the embodiment shown, both capillary cartridges 21 and 22 are substantially planar to provide a relatively large surface area. If both the first capillary cartridge and the second capillary cartridge are substantially planar, then the set of capillary cartridges may be planar. That is, the first capillary cartridge 21 and the second capillary cartridge 22 may be arranged to lie substantially in the same plane.

The capillary cartridges 21 and 22 may have a thickness of less than 2 cm, for example approximately 1.0 cm, approximately 0.5 cm, approximately 0.3 cm, or even less.

The first capillary cartridge 21 may be used for heating a fluid while the second first capillary cartridge 22 may be used for cooling the same fluid. The surface area of the first capillary cartridge 21 may be larger than the surface of the second first capillary cartridge 22. In some embodiments, the surface area of the first capillary cartridge 21 is at least twice as large as the surface area of the first capillary cartridge 22, for example 5 times, 10 times or 15 times as large. In other embodiments, the surface areas of the first and second capillary cartridges may be substantially equal.

The first and second capillary cartridges 21 and 22 each have a body 28 and 29 respectively which may be made of epoxy, for example thermally conductive epoxy, or another material that can be cast or molded, such as various polymers, PTFE (polytetrafluoroethylene), or a metal such as zinc.

The capillaries 23 and 24 may be embedded in the bodies 28 and 29 respectively. Although the capillaries 23 and 24 and the fluid ducts 25, 26 and 27 may be produced as separate items, in some embodiments they may be produced as a single item. That is, a single capillary may be embedded in the capillary cartridges 21 and 22 and also form the fluid ducts 25, 26 and 27. To facilitate handling while preventing damage, the fluid ducts 25, 26 and 27 may be provided with a protective sheath.

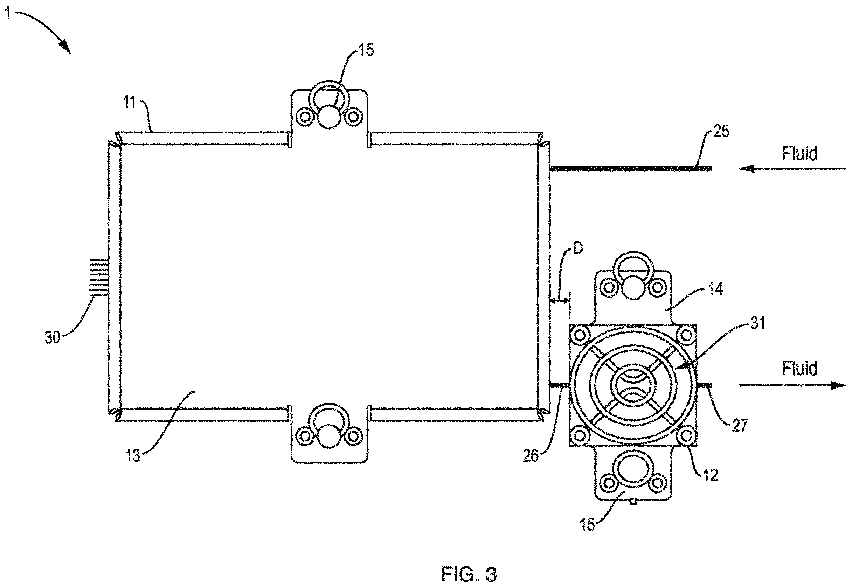

The capillary cartridges 21 and 22 are spaced apart, as shown in Fig. 1, the fluid duct 26 bridging the gap between the capillary cartridges. This gap serves to thermically separate the first and the second housing of the reactor, as will be explained later with reference to Fig. 3.

The first capillary 23 shown in Fig. 1 has a strongly meandering path, which results in a relatively great length of the capillary 23. In some embodiments, this length may be between 3 and 5 meters, for example approximately 4 m. This results in a relatively long residence time of the fluid in the capillary 23.

It can be seen that the first capillary 23 of Fig. 1 has a path which shows double meandering. That is, primary meanders follow a primary path which extends substantially horizontally in Fig. 1, having an 180⁰ curve at each side of the capillary cartridge. In addition, secondary meanders follow a secondary path which extends substantially vertically in Fig. 1, each vertical path ending in an 180⁰ curve. The secondary meanders extend relative to the primary meanders and are smaller. In the example shown, the primary meanders of the first capillary 23 are approximately 10 times as large as the second meanders.

In the embodiment shown, the second capillary 24 also has a path which shows double meandering. The primary meanders of the second capillary 24 are arranged vertically in Fig. 1, while the secondary meanders are arranged horizontally. In the example shown, the primary meanders of the second capillary 24 are approximately 4 times as large as the second meanders.

The double meanders increase the heat exchange between the heating element in the first housing and the first capillary, by making optimal use of the surface area.

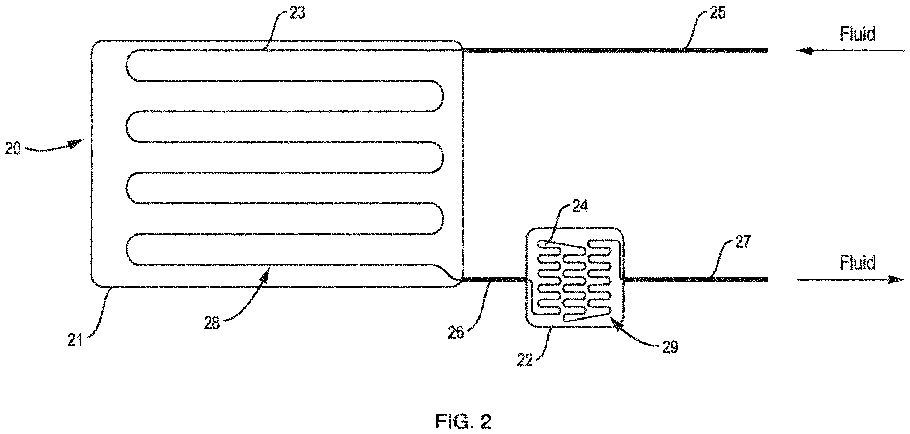

In the embodiment of Fig. 1, the fluid in the first capillary 23 has a relatively long residence time. In other embodiments, a shorter residence time of the fluid is required. This can be achieved with, for example, the embodiment shown in Fig. 2.

The embodiment of Fig. 2 also comprises a first capillary cartridge 21, a second capillary cartridge 22, an input duct 25, an output duct 27, and a connection duct 26. The capillary 23 of the first capillary cartridge 21 of Fig 2 is, however, shorter than in the embodiment of Fig. 1, for example approximately 2 m instead of approximately 4 m. This is achieved by a capillary path that meanders to a lesser extent. While the path of Fig. 1 has both large (primary) and small (secondary) meanders (the small meanders being relative to the large meanders), the path of Fig. 2 has large meanders only, the smaller meanders being absent. Of course, the number of meanders and the degree of meandering may be suitably chosen to suit a particular application and is not limited to the examples of Figs. 1 and 2.

An exemplary embodiment of a reactor according to the invention is illustrated in Fig. 3. The reactor 1 is shown to comprise a first housing 11 and a second housing 12, which are spaced apart. The first housing 11 is arranged for heating, while the second housing 12 is arranged for cooling. The first housing 11 is arranged for accommodating a first capillary cartridge, for example the capillary cartridge 21 illustrated in Figs. 1 or Fig. 2. Similarly, the second housing 12 is arranged for accommodating a second capillary cartridge, for example the capillary cartridge 22 illustrated in Figs. 1 & 2. The first and second capillary cartridges can be connected by a connection conduit 26.

The first housing 11 is shown with its top part or lid 13 attached. Fasteners 15 are provided for fastening the lid 13 onto the housing 1. Electrical leads 30 are connected to an electrical heating element inside the housing 11 to heat the first capillary cartridge in the first housing 11.

The second housing 12 is also shown closed. The second housing 12 is provided with a fan 31 for cooling. The fan 31 is arranged on the top part or lid 14 of the second housing 12. In addition to, or instead of the fan 31, another type of heat abduction unit may be used, for example a cooling unit utilizing a cooling fluid, and/or cooling fins. The second housing 12 can therefore be provided with a heat sink.

In the embodiment shown, the first housing 11 and the second housing 12 are spaced apart by a gap having a width D. This gap serves to prevent or at least reduce a direct heat transfer from the relatively hot first housing 11 to the relatively cool second housing 12.

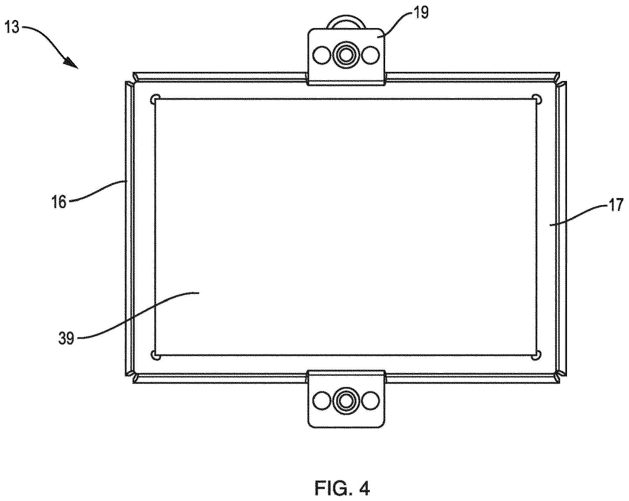

The upper part or lid 13 of the first housing 11 is shown (seen from underneath) in Fig. 4, thus showing part of the interior of the first housing. The lid 13 is shown to comprise side walls 16 and an insulation element 17 defining a recess 39. The recess 39 may accommodate the first capillary cartridge. Fastening brackets 19, which may be integral with the side walls 16, can be configured for receiving fasteners (15 in Fig. 3).

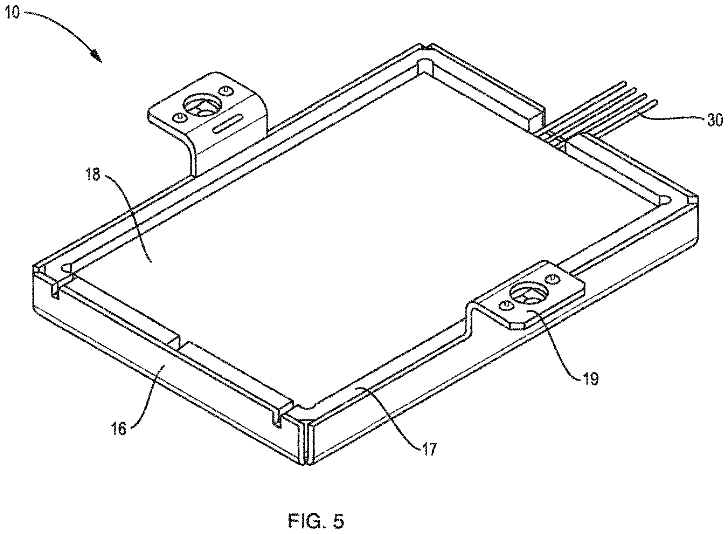

The lower part or bottom part 10 of the first housing 11 is shown in Fig. 5 with the lid (13 in Figs. 3 & 4) removed. The bottom part 10 of the first housing (11 in Fig. 3) is shown to be provided with fastening brackets 19 configured for receiving fasteners (15 in Fig. 3). Side walls 16 provide a recess in which a heating element 18 is arranged. The heating element 18 is separated from the walls of the bottom part 16 by insulation element (or elements) 17.

The first housing 11 and/or the second housing 12 can be made of metal, for example steel. The insulation element 17 may be constituted by a strip of plastic, preferably heat-insulating plastic, or other suitable material. The heating element or heater 18, which in the embodiment shown is substantially planar, may comprise a heating foil, for example a commercially available heating foil. The heating foil may be arranged on a support, such as a metal (e.g., aluminium or metal) plate, to improve the heat distribution. The heating foil may be glued on the plate. The first capillary cartridge (21 in Figs. 1 & 2) may be arranged on top of the heater 18. A temperature sensor (not shown) may be arranged in the first housing to control the heater. A first pair of electrical leads 30 may be connected to a power source to provide electrical power for the heater 18, while a second pair of electrical leads 30 may serve to transmit a signal from a temperature sensor (not shown) which may be arranged underneath the heater 18. A controller may be provided to control the temperature of the heater. In some applications, a suitable temperature is between 80° and 120°, more specifically between 90° and 110°, for example approximately 100°, although other temperatures may also be used.

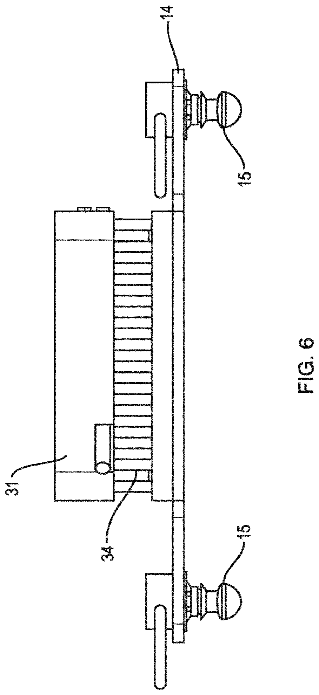

The top part 14 of the second housing 12 is shown in Fig. 6. A fan 31 is mounted on a heat sink 34, which is in turn mounted on the top part or lid 14. Fasteners 15 serve to fasten the lid 14 to the bottom part (32 in Fig. 6) of the second housing 12.

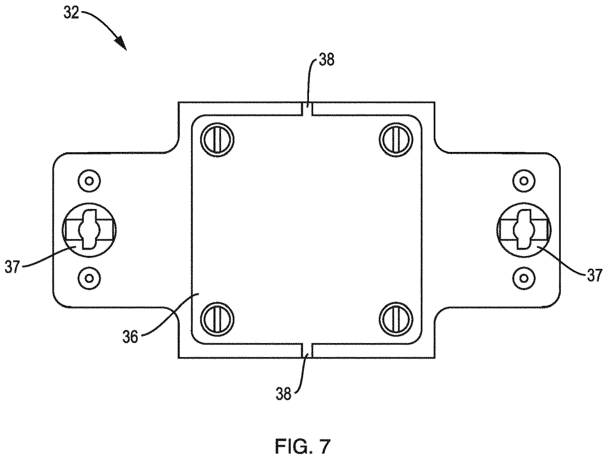

The bottom part 32 shown in Fig. 7 comprises a recess 36 for accommodating the second capillary cartridge (22 in Figs. 1 & 2). Channels 38 are provided for passing the capillary and any electrical leads. Openings 37 for receiving fasteners (15 in Fig. 6) are also provided.

The reactor assembly may be operated at a safe, low voltage (such as 12 V, 24 V or 48 V), thus allowing operators to exchange a reactor without requiring the assistance of a service engineer. In typical embodiments of the invention, a separation system module is not present.

The invention provides a reactor which is particularly, but not exclusively, suitable for liquid chromatography (LC), more in particular for liquid chromatography isotope ratio mass spectrometry (LC-IRMS), or for liquid chromatography flame ionization detection (LC-FID).

The invention also provides a chromatography system, in particular a liquid chromatography isotope ratio mass spectrometry system, comprising a liquid chromatography device and an isotope ratio mass spectrometry device, which system further comprises at least one reactor. The invention also provides the use of such a reactor.

The invention additionally provides a capillary cartridge comprising a capillary embedded in a cartridge body, which capillary cartridge is connected to at least one further capillary cartridge which may also comprise a capillary embedded in cartridge body.

It will be understood by those skilled in the art that the invention is not limited to the embodiments shown and that various additions and modifications may be made without departing from the scope of the invention as defined in the appending claims.

## Claims

1. A reactor (1) for a liquid chromatography system, the reactor comprising:
- a first capillary cartridge (21),
- a second capillary cartridge (22),
- a first housing (11) for accommodating the first capillary cartridge,
- a second housing (12) for accommodating the second capillary cartridge,
wherein the first housing comprises a heating element (18) for heating the first capillary cartridge and the second housing comprises a cooling element (31, 34) for cooling the second capillary cartridge,
wherein an output orifice of the first capillary cartridge (21) is connected to an input orifice of the second capillary cartridge (22), and
wherein the first capillary cartridge is substantially planar and comprises a capillary (23) having a substantially planar path.

2. The reactor according to claim 1, wherein the heating element (18) comprises a heating foil.

3. The reactor according to claim 2, wherein the heating foil is arranged on a support plate, preferably a metal support plate.

4. The reactor according to any of the preceding claims, wherein the cooling element comprises a fan (31).

5. The reactor according to any of the preceding claims, wherein the first capillary cartridge (21) is larger than the second capillary cartridge (22), preferably at least twice as large.

6. The reactor according to any of the preceding claims, wherein the first capillary cartridge (21) and the second capillary cartridge (22) are spaced apart, and wherein preferably the first housing (11) and the second housing (12) are also spaced apart.

7. The reactor according to any of the preceding claims, wherein the first capillary cartridge (21) comprises a single capillary (23) having an input orifice and an output orifice, wherein the second capillary cartridge (22) comprises a single capillary (24) having an input orifice and an output orifice, and wherein the output orifice of the first capillary cartridge is connected to the input orifice of the second capillary cartridge by a connecting duct (26).

8. The reactor according to claim 8, wherein the first capillary cartridge (21), the connecting duct (26) and the second capillary cartridge (22) are integrally formed.

9. The reactor according to any of the preceding claims, wherein the second capillary cartridge(22) is substantially planar and comprises a capillary (24) having a substantially planar path.

10. The reactor according to any of the preceding claims, wherein the capillary (23) of the first capillary cartridge (21) and/or the capillary (24) of the second capillary cartridge (22) is arranged in a meandering path.

11. The reactor according to any of the preceding claims, wherein the capillary of the first capillary cartridge (21) has a length of between 1 and 6 m, preferably between 2 and 5 m.

12. The reactor according to any of the preceding claims, wherein the capillary of the first capillary cartridge (21) has an inner diameter of between 0.1 and 1.0 mm, preferably between 0.2 and 0.5 mm.

13. The reactor according to any of the preceding claims, wherein the first capillary cartridge (21) and/or the second capillary cartridge (22) comprises a thermally conductive epoxy resin.

14. A liquid chromatography - isotope ratio mass spectrometry system, comprising a reactor (1) according to any of the preceding claims.

15. A set of capillary cartridges, comprising a first capillary cartridge (21) and a second capillary cartridge (22),
wherein an output orifice of the first capillary cartridge is connected to an input orifice of the second capillary cartridge, and
wherein the first capillary cartridge is substantially planar and comprises a capillary having a substantially planar path,
the first capillary cartridge and the second capillary cartridge preferably being connected by a connecting duct (26).
